# EUROPÄISCHE PATENTSCHRIFT

(11) **EP 0 817 941 B1**
(45) Veröffentlichungstag und Bekanntmachung des Hinweises auf die Patenterteilung: **26.05.1999**
(21) Anmeldenummer: 96901760.7
(22) Anmeldetag: 24.01.1996
(51) Int. Cl.: F21Q 1/00, F21M 3/02

(54) **FAHRZEUGLEUCHTE**
VEHICLE LAMP
FEU DE VEHICULE

(30) Priorität: 28.03.1995 DE 19511165
(43) Veröffentlichungstag der Anmeldung: 14.01.1998
(73) Patentinhaber: ITT Automotive Europe GmbH, 60488 Frankfurt am Main (DE)
(72) Erfinder: FEGER, Rolf, D-74321 Bietigheim-Bissingen (DE)
(74) Vertreter: Dreiss, Fuhlendorf, Steimle & Becker
(86) Internationale Anmeldenummer: EP9600278
(87) Internationale Veröffentlichungsnummer: WO9630696

(56) Entgegenhaltungen:
- GB-A- 2 071 559
- US-A- 3 104 831

## Beschreibung

Die Erfindung geht aus von einer Fahrzeugleuchte mit den Merkmalen des Oberbegriffs des Anspruchs 1 wie z.B. aus GB-A-2 071 559 bekannt ist.

Bei Fahrzeugleuchten beginnt derzeit ein neuer Trend im Design, wobei eine brillante transparente Erscheinung der Leuchte angestrebt wird. Deshalb ist nunmehr die Verwendung einer brillanten transparenten klaren Abdeckscheibe vorgesehen, welche die Leuchte nach außen hin abschließt und keinerlei Lichtverteilungsoptik in Form angeformter Linsen oder dergleichen aufweist. Um die erforderliche Lichtverteilung zu erreichen, ist in dem Reflektorgehäuse der Fahrzeugleuchte ein entsprechender Freiformflächenreflektor angeordnet. Dieser Freiformflächenreflektor ist mit einer Reflexionsschicht versehen, welche die brillante transparente Erscheinung der Leuchte noch besser hervorhebt, bzw. verstärkt. Vorzugsweise ist die Reflexionsfläche des Freiformflächenreflektors verspiegelt, was besonders günstig durch Bedampfen mit einer feinen hochglänzenden Metallschicht erreicht wird. Bei derartigen Fahrzeugleuchten will man andererseits nicht auf die Verwendung kostengünstig im Spritzguß aus Kunststoff herstellbare Reflektorgehäuse verzichten. Da aber derartige Reflektorgehäuse zahlreiche Anformungen, wie beispielsweise Befestigungsaugen, Stützrippen, Dichtrippen, Versteifungsrippen, sowie eine Halterung bzw. Aufnahme für einen Lampenträger angeformt sind, wäre eine unmittelbar mit dem Gehäuse ausgebildete Reflexionsfläche eines Freiformflächenreflektors mit einer Anzahl Unregelmäßigkeiten in der Oberfläche ausgebildet, welche, insbesondere bei einer Verspiegelung dieser Reflexionsfläche, besonders deutlich sichtbar in Erscheinung treten würden. Derartige Unregelmäßigkeiten könnten dann auch deutlich durch die Abeckscheibe hindurch wahrgenommen werden. Um diesen Nachteil zu beseitigen, wurde bereits vorgeschlagen, in dem Reflektorgehäuse einen separat gefertigten Freiformflächenreflektor mit einheitlich gleichmäßiger Wanddicke anzuordnen und mit, dem Reflektorgehäuse zu verrasten oder zu verschweißen oder dergleichen.

Nachteilig an dieser vorgeschlagenen Lösung ist, daß der Freiformflächenreflektor als separates Bauteil gehandhabt werden muß und daß bei seiner Montage im Reflektorgehäuse solche Lagetoleranzen zwischen der Lichtquelle und der Reflexionsfläche entstehen können, die sich negativ auf die erforderliche Lichtverteilung auswirken und damit die Funktionssicherheit der Fahrzeugleuchte vermindern. Durch die separate Fertigung des Freiformflächenreflektors wird die Herstellung der Fahrzeugleuchte aufwendiger und der Materialeinsatz erhöht sich. Insgesamt wird eine derartige Fahrzeugleuchte also relativ teuer.

Aufgabe der Erfindung ist es, eine Fahrzeugleuchte der eingangs beschriebenen Art so zu verbessern, daß sie einfacher und billiger wird, aber dabei ihre volle Funktionsfähigkeit gewährleistet ist.

Erfindungsgemäß wird die Aufgabe durch eine Fahrzeugleuchte mit den Merkmalen des Anspruchs 1 gelöst.

Dadurch, daß das Reflektorgehäuse insgesamt einteilig im Mehrkomponentenspritzguß hergestellt ist, verringert sich die Anzahl der zu handhabenden Bauteile und der konstruktive Aufbau des Reflektorgehäuses vereinfacht sind.

Außerdem kann durch die Vereinigung von Basisteil und Freiformflächenreflektor, welche gemeinsam das Reflektorgehäuse bilden, Material eingespart werden. Insgesamt tritt also eine Verbilligung bei der Herstellung einer erfindungsgemäßen Fahrzeugleuchte ein. Ein weiterer wesentlicher Vorteil besteht darin, daß der Freiformflächenreflektor aufgrund seiner formschlüssigen und materialschlüssigen Verbindung mit dem Basisteil stets in einer exakten vorherbestimmten reproduzierbaren Lage gegenüber dem Basisteil und damit auch gegenüber der an dem Basisteil anzubringenden Lichtquelle hergestellt wird. Dadurch wird eine hohe Funktionssicherheit der Fahrzeugleuchte hinsichtlich ihrer Lichtverteilung gewährleistet.

Eventuelle Unregelmäßigkeiten in der Fläche des Basisteiles, auf welche der Freiformflächenreflektor aufgespritzt ist, werden im Rahmen der Schichtdicke des Freiformflächenreflektors ausgeglichen und treten auf der, vorzugsweise zu verspiegelnden, Reflexionsfläche des Freiformflächenreflektors nicht in Erscheinung.

Vorteilhafte Ausgestaltungen der Erfindung sind Gegenstand der Ansprüche 2 bis 8 und sind später in verschiedenen Ausführungsbeispielen näher beschrieben.

Eine vorteilhafte Ausgestaltung gemäß Anspruch 2 sieht vor, daß der Freiformflächenreflektor aus einem dem Basisteil gleichartigen Kunststoffmaterial oder aus Kostengründen und/oder aus funktionstechnischen Gründen aus einem gegenüber dem Basisteil verschiedenartigen Kunststoffmaterial besteht.

Weitere Einzelheiten werden in den nachfolgenden Ausführungsbeispielen anhand der Zeichnung näher beschrieben. In der Zeichnung zeigen:
- Fig. 1: in Schnittdarstellung ein an eine Fahrzeugkarosserie angebaute Fahrzeugleuchte,
- Fig. 2: in Schnittdarstellung ein anderes Ausführungsbeispiel einer an eine Fahrzeugkarosserie angebauten Fahrzeugleuchte und
- Fig. 3: in Schittdarstellung ein zweites Ausführungsbeispiel für eine an das Reflektorgehäuse angespritzte Weichlippe (Ausschnitt).

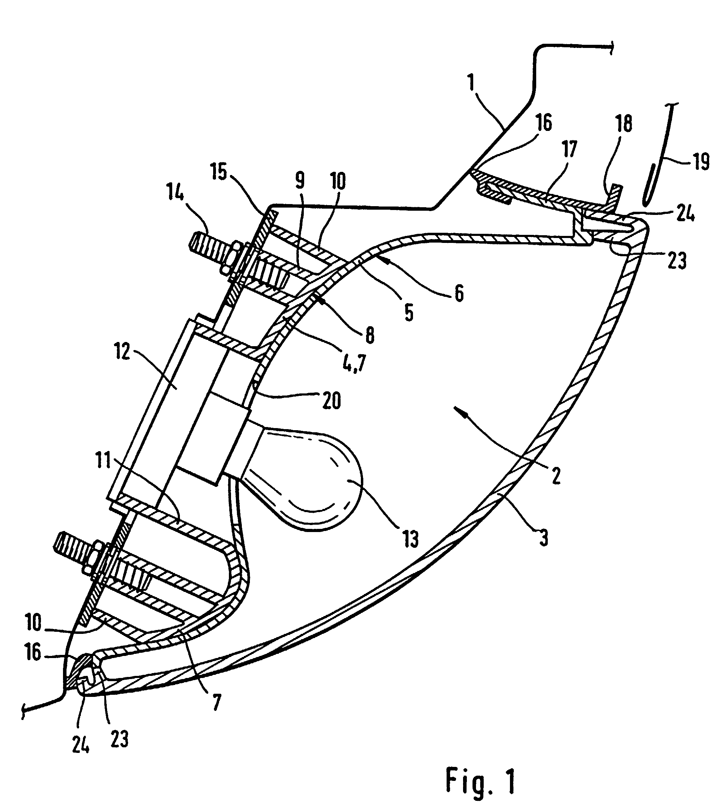

In der horizontalen Schnittdarstellung von Fig. 1 ist eine Fahrzeugleuchte erkennbar, die im Heckbereich eines Kraftfahrzeuges an die Karosserie 1 angebaut ist. Die Fahrzeugleuchte weist ein Reflektorgehäuse 2 auf, welches, bezogen auf die Fahrtrichtung des Kraftfahrzeuges, nach rückwärts geöffnet ist. An dieser auf die Fahrzeugleuchte bezogene Vorderseite ist das Reflektorgehäuse 2 durch eine Abdeckscheibe 3 verschlossen, welche an dem Reflektorgehäuse 2 befestigt ist und in einer brillanten transparenten Ausbildung ausgeführt ist. Die Abdeckscheibe 3 kann entsprechend der Signalfunktion der Fahrzeugleuchte eingefärbt sein. Sie ist außerdem in einer gleichmäßigen Stärke ausgeführt und weist keinerlei Lichtverteilungsoptik auf.

Das Reflektorgehäuse 2 ist einteilig im Mehrkomponentenspritzguß aus Kunststoff, beispielsweise ABS, hergestellt und strukturell in den in einem ersten Spritztakt gespritzten Basisteil 4 und den in einem zweiten Spritztakt an den Basisteil 4 angespritzten Freiformflächenreflektor 5 gegliedert. Der Freiformflächenreflektor 5 weist eine Reflexionsfläche 6 auf und ist so geformt, daß er für die erforderliche Lichtverteilung sorgt. Um andererseits die erforderliche Lichtausbeute zu gewährleisten und den brillanten Eindruck der Fahrzeugleuchte noch weiter zu verstärken, ist die Reflexionsfläche 6 mit einer dünnen Metallschicht bedampft und dadurch hoch verspiegelt.

Der Freiformlächenreflektor 5 ist mit einer im wesentlichen einheitlichen gleichmäßigen Schichtdicke ausgebildet und auf die Stützfläche 7 des Basisteiles 4 aufgespritzt. Die Stützfläche 7 ist so geformt, daß die Form ihrer Fläche 8, welche der Abdeckscheibe 3 zugewandt ist, bereits der Form des auf sie aufgespritzten Abschnittes des Freiformflächenreflektors 5 entspricht. An dieser Stelle ist zu bemerken, daß die Fläche 8 der Stützfläche 9 nach dem Anspritzen des Freiformflächenreflektors 5 tatsächlich kaum noch vorhanden sein dürfte.

Es ist zu erkennen, daß an die Rückseite der Stützwand 7 die Befestigungsaugen 9 und die Dichtrippen 10 sowie die Aufnahme 11 für den Lampenträger 12 mit der in ihn eingesetzten Glühlampe 13 angeformt sind. In den Befestigungsaugen 9 sind Befestigungsschrauben 14 gehalten, mit denen die Fahrzeugleuchte an der Karosserie 1 befestigt ist. Die Dichtrippe 10 stützt sich mit ihrem freien Rand dichtend auf einer zwischen die Fahrzeugleuchte und Fahrzeugkarosserie 1 gebrachten Dichtung 15 ab.

In Fig. 1 ist zu erkennen, daß der Freiformflächenreflektor 5 die Stützwand 7 des Basisteiles 4 zu seinem äußeren Rand hin überragt. Diese Abschnitte des Freiformflächenreflektors 5 haben also neben ihrer Reflektorfunktion auch noch eine konstruktive bzw. tragende Funktion für das Reflektorgehäuse 2. An den äußeren Rändern des Freiformflächenreflektors 5 sind Schweißrippen vorgesehen, mit denen korrespondierende Schweißrippen der Abdeckscheibe 3 verschweißt sind. Am unteren Rand der Fig. 1 ist eine Weichlippe 16 erkennbar, welche in einem dritten Spritztakt an den Rand des Freiformflächenreflektors 5 angespritzt ist. Diese Weichlippe 16 erstreckt sich in Richtung Außenseite der Fahrzeugleuchte und liegt dabei außen an einem einwärts gerichteten Rand der Abdeckscheibe 3 und gleichzeitig an der benachbarten Karosserie 1 an.

Auch am oberen Rand der Fig. 1 ist eine Weichlippe 16 erkennbar, diese ist jedoch an eine Stützrippe 17 angespritzt, welche an den Rand des Freiformflächenreflektors 5 angeformt ist und sich in Richtung auf die Karosserie 1 erstreckt. Über die Weichlippe 16 stützt sich die Stützrippe 17 an der Karosserie 1 ab. Es ist noch erkennbar, daß sich eine weitere Weichlippe 18 ausgehend von der Stützrippe 17 über eine Verbindungsstelle zwischen dem Freiformflächenreflektor 5 und einem einwärtsgerichteten Rand 24 der Abdeckscheibe 3 erstreckt und dann nahezu rechtwinklig von dem Rand 24 der Abdeckscheibe 3 seitlich absteht. Diese Weichlippe 18 verblendet einen Spalt zwischen der Fahrzeugleuchte und der Kofferklappe 19 des Kraftfahrzeuges.

Die Aufnahme 11 des Basisteiles 4 bildet eine Art Schacht, in welchen von der Rückseite der Fahrzeugleuchte her, der Lampenträger 12, mit der Glühlampe 13 eingesteckt ist. Es ist ersichtlich, daß der Freiformflächenreflektor 5 auch den inneren Rand dieses Schachtes überragt. Im Bereich dieses von der Aufnahme 11 gebildeten Schachtes weist der Freiformflächenreflektor 5 einen Durchbruch 20 auf, der lediglich so groß bemessen ist, daß der Glaskolben der Glühlampe 13 hindurchführbar ist. Damit wird erreicht, daß der Durchbruch 20, welcher durch die Abdeckscheibe 3, der Fahrzeugleuchte von außen sichtbar ist, das angestrebte Designziel wo wenig als möglich stört. Der Querschnitt des von der Aufnahme 11 gebildeten Schachtes ist wesentlich größer und würde ohne Überdeckung durch einen Teil des Freiformflächenreflektors 5 eine wesentlich größere Störung des stilistischen Eindruckes dieser Fahrzeugleuchte zur Folge haben.

Es wird noch darauf hingewiesen, daß aufgrund der teilweise tragenden Funktion des Freiformflächenreflektors 5 bei den vorliegenden Ausführungsbeispielen eine materialsparende Leuchtenkonstruktion verwirklicht ist.

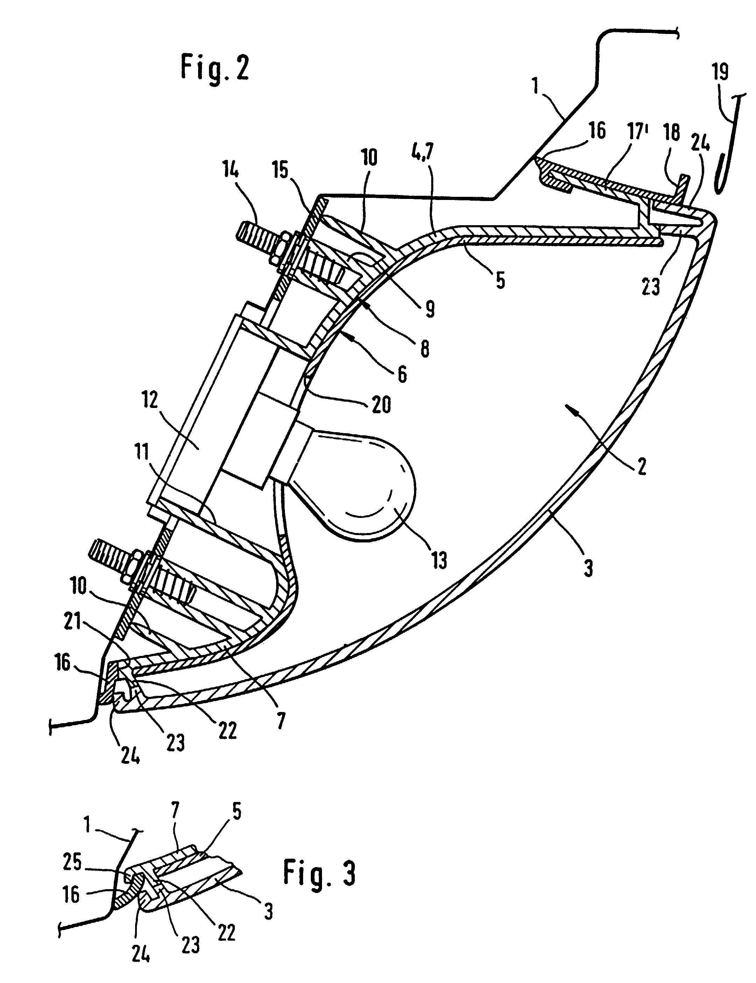

Bei dem in Fig. 2 gezeigten Ausführungsbeispiel einer Fahrzeugleuchte stimmen viele Merkmale mit dem Ausführungsbeispiel von Fig. 1 überein. Deshalb sind in Fig. 2 für gleiche oder gleichartige Bauteile bzw. Details gleiche Bezugszeichen verwendet worden. Auf eine Wiederholung der Beschreibung gleichartiger Merkmale und ihrer Vorteile bzw. Wirkungen wird weitgehend verzichtet. Die Beschreibung zum Ausführungsbeispiel gemäß Fig. 2 ist im wesentlichen auf die Unterschiede gegenüber dem Ausführungsbeispiel von Fig. 1 gerichtet.

Der wesentliche Unterschied der Fahrzeugleuchte aus Fig. 2 ist darin zu sehen, daß der Basisteil 4 des Reflektorgehäuses 2 allein die tragende-Funktion der Fahrzeugleuchte ausübt. Es ist deutlich erkennbar, daß die Stützwand 7 bei dieser Fahrzeugleuchte bis zu den äußeren Rändern reicht und dort unmittelbar mit der Abdeckscheibe 3 verbunden ist. Ebenfalls wesentlich ist, daß der Freiformfiächenreflektor 5 im wesentlichen als gleichmäßig dünne Reflektorschicht auf die der Abdeckscheibe 3 zugewandte Fläche 8 der Stützwand 7 aufgespritzt ist. Es wird besonders darauf hingewiesen, daß die Schichtdicke des Freiformflächenreflektors 5 wesentlich dünner ist als die Wanddicke der Stützwand 7, weil dieses Dickenverhältnis aus der zeichnerischen Darstellung von Fig. 2 nicht ersichtlich ist. Aufgrund dieser dünnen Ausbildung des Freiformflächenreflektors 5 ist auch in diesem Fall eine Materialeinsparung gegenüber der Fahrzeugleuchte erreichbar, von welcher die vorliegende Erfindung ausgeht.

Aus Fig. 2 ist ersichtlich, daß sich der Freiformflächenreflektor 5 nunmehr im wesentlichen bis zu den äußeren Rändern der Stützfläche 7 des Basisteiles 4 erstreckt und ebenso wie in Fig. 1 den von der Aufnahme 11 für den Lampenträger 12 gebildeten Schacht nach innen überragt. Im Bereich des von der Aufnahme 11 gebildeten Schachtes ist wiederum ein Durchbruch 20 in dem Freiformflächenreflektor 5 vorgesehen, der nur so groß ist, daß der Glaskolben der Glühlampe 13 hindurchführbar ist. Ein weiterer Unterschied besteht darin, daß die in Fig. 2 am oberen Rand der Fahrzeugleuchte vorgesehene Stützrippe 17', an welche die Weichlippe 16 und die Weichlippe 18 angespritzt sind, an die Stützwand 7 des Basisteiles 4 und nicht an den Freiformflächenreflektor 5 angeformt ist.

Ein letzter Unterschied ist hinsichtlich der Weichlippe 16 am unteren Rand der Fig. 2 erkennbar. Auch in diesem Bereich ist nunmehr die Weichlippe 16 nicht wie in Fig. 1 an den Freiformflächenreflektor 5 sondern an die Stützwand 7 des Basisteiles 4 -angeformt. Die Stützwand 7 weist hier eine Stirnfläche 21 auf, in deren Nähe eine auswärtsgerichtete Verbindungsrippe 22 ausgeformt ist. Mit dieser Verbindungsrippe 22 ist eine einwärtsgerichtete Verbindungsrippe 23 verschweißt, welche in einem geringen Abstand von dem äußeren einwärtsgerichteten Rand 24 an die Abdeckscheibe 3 angeformt ist. Die Weichlippe 16 ist an die Stirnfläche 21 angespritzt und erstreckt sich von dort in Richtung Außenseite der Fahrzeugleuchte. Dabei liegt die Weichlippe 16 einerseits an der Außenseite des einwärtsgerichteten Randes 24 der Abdeckscheibe 3 und andererseits an der benachbarten Karosserie 1 an.

Alle anderen Merkmale und Funktionen des Ausführungsbeispieles von Fig. 2 entsprechen dem Ausführungsbeispiel von Fig. 1.

Aus Fig. 3 ist letztendlich eine andere Gestaltung hinsichtlich der Weichlippe 16 ersichtlich. In diesem Falle ist außer dem einwärtsgerichteten äußeren Rand 24 und der einwärts gerichteten Verbindungsrippe 23 der Abdeckscheibe 3 sowie der auswärtsgerichteten Verbindungsrippe 22 der Stützfläche 7 ein auswärtsgerichteter äußerer Rand 25 zu sehen, der in einem geringen Abstand von der auswärtsgerichteten Verbindungsrippe 22 an der Stützwand 7 vorhanden ist. Die Weichlippe 16 ist hierbei innerhalb der zwischen dem Rand 25 und der Stützrippe 22 gebildeten Tasche an die Stützwand 7 des Basisteiles 4 angespritzt und erstreckt sich durch einen Spalt zwischen dem auswärtsgerichteten Rand 25 und dem einwärtsgerichteten Rand 24 zur Außenseite der Fahrzeugleuchte und liegt an der benachbarten Karosserie 1 an.

### Bezugszeichenliste

- 1: Karosserie
- 2: Reflektorgehäuse
- 3: Abdeckscheibe
- 4: Basisteil
- 5: Freiformflächenreflektor
- 6: Reflexionsfläche
- 7: Stützwand
- 8: Fläche
- 9: Befestigungsauge
- 10: Dichtrippe
- 11: Aufnahme
- 12: Lampenträger
- 13: Glühlampe
- 14: Befestigungsschraube
- 15: Dichtung
- 16: Weichlippe
- 17: Stützrippe
- 17': Stützrippe
- 18: Weichlippe
- 19: Kofferklappe
- 20: Durchbruch
- 21: Stirnfläche
- 22: (auswärtsgerichtete) Verbindungsrippe
- 23: (einwärtsgerichtete) Verbindungsrippe
- 24: (einwärtsgerichteter) Rand
- 25: (auswärtsgerichteter) Rand

## Patentansprüche

1. Fahrzeugleuchte mit einer brillanten transparenten und gegebenenfalls der Signalfunktion entsprechend eingefärbten Abdeckscheibe (3), welche ohne jegliche Lichtverteilungsoptik ausgebildet ist, und mit einem Reflektorgehäuse (2) aus Kunststoff, das aus einem Basisteil (4) und einem an dem Basisteil (4) befestigten Freiformflächenreflektor (5) mit einer, vorzugsweise verspiegelten, Reflexionsfläche (6)besteht, wobei der Basisteil (4) mit allen Befestigungsaugen (9), Versteifungsrippen oder sonstigen Rippen, einer Halterung bzw. Aufnahme (11) für einen Lampenträger (12) und dergleichen mehr ausgestattet ist und der Freiformflächenreflektor (5) für die erforderliche Lichtverteilung sorgt, wobei die Abdeckscheibe (3), vorzugsweise durch Schweißen oder Kleben, an dem Reflektorgehäuse (2) befestigt ist und eine Lichtquelle, vorzugsweise eine Glühlampe (13), in einer zwischen dem Freiformreflektor (5) und der Abdeckscheibe (3) gebildeten Leuchtenkammer angeordnet ist, **dadurch gekennzeichnet,** daß das Reflektorgehäuse (2) einteilig im Mehrkomponentenspritzguß hergestellt ist, daß der Basisteil (4) in einem ersten Spritztakt gespritzt ist wobei der Basisteil eine Stützwand (7) für den Freiformflächenreflektor (5) mit einer der Abdeckscheibe (3) zugewandten Fläche (8) aufweist, deren Form zumindest einem Abschnitt der Form des Freiformflächenreflektors (5) entspricht, und daß der Freiformflächenreflektor (5) in einem zweiten Spritztakt gespritzt ist und dabei auf die der Abdeckscheibe (3) zugewandte Fläche (8) der Stützwand (7) des Basisteiles (4) so aufgespritzt ist, daß die, vorzugsweise zu verspiegelnde, Reflexionsfläche (6) im sichtbaren Bereich frei von störenden Unregelmäßigkeiten ausgebildet ist.

2. Fahrzeugleuchte nach Anspruch 1, **dadurch gekennzeichnet,** daß der Freiformflächenreflektor (5) aus einem dem Basisteil (4) gleichartigen oder verschiedenartigen Kunststoffmaterial besteht.

3. Fahrzeugleuchte nach einem der vorhergehenden Ansprüche, **dadurch gekennzeichnet,** daß der Freiformflächenreflektor (5) die Stützwand (7) des Basisteiles (4) nach auswärts überragt und daß die Abdeckscheibe (3) an dem überragenden Rand des Freiformflächenreflektors (5) befestigt ist.

4. Fahrzeugleuchte nach Anspruch 3, **dadurch gekennzeichnet,** daß an den überragenden Rand des Freiformflächenreflektors (5) und/oder an eine an den überragenden Rand angeformte Stützrippe (17) in einem dritten Spritztakt eine oder mehrere Weichlippen (16, 18) angespritzt sind.

5. Fahrzeugleuchte nach einem der Ansprüche 1 oder 2, **dadurch gekennzeichnet,** daß sich die Stützwand (7) des Basisteiles (4), welche die der Abdeckscheibe (3) zugewandte Fläche (8) aufweist, bis zum Rand des Reflektorgehäuses (2) erstreckt, daß der auf die Fläche (8) aufgespritzte Freiformflächenreflektor (5) gegenüber der Stützwand (7) des Basisteiles (4) verhältnismäßig dünn ist und im wesentlichen mit dem äußeren Rand der Fläche (8) abschließt und daß die Abdeckscheibe (3) an dem Rand der Stützwand (7) des Basisteiles (4) befestigt ist.

6. Fahrzeugleuchte nach Anspruch 5, **dadurch gekennzeichnet,** daß an den Rand der Stützwand (7) des Basisteiles (4) und/oder an eine an den Rand der Stützwand (7) angeformte Stützrippe (17)' in einem dritten Spritztakt eine oder mehrere Weichlippen (16, 18) angespritzt sind.

7. Fahrzeugleuchte nach Anspruch 6, wobei die Abdeckscheibe (3) einen einwärts gerichteten Rand (24) und in geringem Abstand neben diesem Rand (24) eine einwärtsgerichtete Verbindungsrippe (23) aufweist und die Stützwand (7) des Basisteiles (4) in geringem Abstand von einer am Rand der Stützwand (7) ausgebildeten Stirnfläche (21) eine auswärtsgerichtete Verbindungsrippe (22) aufweist und Abdeckscheibe (3) und Basisteil (4) an diesen Verbindungsrippen (22, 23) miteinander verbunden sind, **dadurch gekennzeichnet,** daß die Weichlippe (16) an die Stirnfläche (21) der Stützwand (7) angespritzt ist und daß sich die Weichlippe (16) von der Stirnfläche (21) aus in Richtung zur Außenseite der Abdeckscheibe (3) erstreckt und dabei außen an dem einwärtsgerichteten Rand (24) der Abdeckscheibe (3) anliegt.

8. Fahrzeugleuchte nach Anspruch 6, wobei die Abdeckscheibe (3) einen einwärtsgerichteten Rand (24) und in geringem Abstand neben diesem Rand (24) eine einwärtsgerichtete Verbindungsrippe (23) aufweist und die Stützwand (7) des Basisteiles (4) einen auswärtsgerichteten Rand (25) und in geringem Abstand neben diesem Rand (25) eine auswärtsgerichtete Verbindungsrippe (22) aufweist und Abdeckscheibe (3) und Basisteil (4) an diesen Verbindungsrippen (22, 23) miteinander verbunden sind, **dadurch gekennzeichnet,** daß die Weichlippe (16) in der zwischen dem auswärtsgerichteten Rand (25) und der Verbindungsrippe (22) der Stützwand (7) gebildeten Tasche an das Reflektorgehäuse (2) angespritzt ist und sich durch einen zwischen dem Rand (24) der Abdeckscheibe (3) und dem Rand (25) und der Stützwand (7) gebildeten Spalt hindurch an die Außenseite der Fahrzeugleuchte erstreckt.

## Claims

1. A vehicle lamp comprising a brilliant, transparent cover disc (3) optionally colored in accordance with the signal function, which is designed free from of any optical light distribution means, and comprising a reflector casing (2) of plastic material made up of a base part (4) and a free-formed surface reflector (5) fixed to the base part (4) and being provided with a - preferably silvered - reflecting surface (6), with the base part (4) being furnished with all mounting ears (9), reinforcing fins or the like fins, a holder or support (11) for a lamp carrier (12) and the like, and with the free-formed surface reflector (5) insuring the required light distribution, with the cover disc (3) being secured, preferably by welding or adhesive means, to the reflector casing (2), and a light source, preferably a luminescent lamp (13) being arranged in a lamp chamber formed between the free-formed reflector (5) and the cover disc (3), characterized in that the reflector casing (2) is integrally formed by multi-component injection molding, that the base part (4) is injection-molded in a first injection cycle, with the base part comprising a support wall (7) for the free-formed surface reflector (5) having a surface (8) facing the cover disc (3), with the form of such surface (8) conforming at least to a section of the shaping of the free-formed surface reflector (5), and that the free-formed surface reflector (5) is injection-molded in a second injection cycle, thereby being so sprayed onto the face (8) of the support wall (7) of the base part (4) facing the cover disc (3), that the reflecting surface (6) preferably to be silvered, in the visible area, does not exhibit any irregularities of a disturbing effect.

2. A vehicle lamp according to claim 1, characterized in that the free-formed surface reflector (5) is made of a plastic material identical with or different from the one of which the base part (4) is made.

3. A vehicle lamp according to any one of the preceding claims, characterized in that the free-formed surface reflector (5) externally protrudes beyond the support wall (7) of the base part (4), and that the cover disc (3) is secured to the protruding edge of the free-formed surface reflector (5).

4. A vehicle lamp according to claim 3, characterized in that one or several soft lips (16,18) formed on the protruding edge of the free-formed surface reflector (5) and/or on a support fin (17) formed on the protruding edge is/are injection-molded in an third injection cycle.

5. A vehicle lamp according to any one of claims 1 or 2, characterized in that the support wall (7) of the base part (4) comprising the surface (8) facing the cover disc (3), extends to the edge of the reflector casing (2), that the free-formed surface reflector (5) injection-molded on the surface (8) over the support wall (7) of the base part (4) is relatively thin and substantially ends up with the outer edge of the surface (8), and that the cover disc (3) is secured to the edge of the support wall (7) of the base part (4).

6. A vehicle lamp according to claim 5, characterized in that one or several soft lips (16,18), in a third injection cycle, are injection-molded on the edge of the support wall (7) of the base part and/or on a support fin (17') formed on the edge of the support wall (7).

7. A vehicle lamp according to claim 6, wherein the cover disc (3) is provided with an inwardly directed edge (24) and an inwardly directed connecting fin (23) at a small distance from the said edge (24), and wherein the support wall (7) of the base part (4) includes an outwardly directed connecting fin (22) at a small distance from a front face (21) formed on the edge of the support wall (7), and wherein cover disc (3) and base part (4) are interconnected on the said connecting fins (22,23), characterized in that the soft lip (16) is injection-molded on the front face (21) of the support wall (7), and that the soft lip (16) extends from the front face (21) toward the outer side of the cover disc (3) thereby being, externally, in abutment with the inwardly directed edge (24) of the cover disc (3).

8. A vehicle lamp according to claim 6, wherein the cover disc (3) comprises an inwardly directed edge (24) and an inwardly directed connecting fin (23) at a small distance from the said edge (24), and wherein the support wall (7) of the base part (4) comprises an outwardly directed edge (25) and an inwardly directed connecting fin (22) at a small distance from the said edge (25), and wherein cover disc (3) and base part (4) are interconnected on the said connecting fins (22,23), characterized in that the soft lip (16) is injection-molded on the reflector casing (2)in the pocket formed between the outwardly directed edge (25) and the connecting fin (22) of the support wall (7) and extends through a gap formed between the edge (24) of the cover disc (3) and the edge (25) of the support wall (7) toward the outer side of the vehicle lamp.

## Revendications

1. Feu de véhicule muni d'un couvercle de protection (3) brillant, transparent et d'une couleur correspondant le cas échéant à la fonction de signalisation, qui est réalisé sans aucun système optique de diffusion de lumière, et d'un boîtier (2) de réflecteur en matière plastique, comprenant une partie de base (4) et un réflecteur (5) à surfaces d'une forme libre fixé à la partie de base (4) comportant une surface réfléchissante (6), de préférence métallisée, dans lequel la partie de base (4) est munie de tous les oeillets de fixation (9), nervures de renforcement ou autres nervures, d'un support ou d'un dispositif de réception (11) destiné à un support de lampe (12) et analogue, et le réflecteur (5) à surfaces (12) d'une forme libre assure la diffusion de lumière requise, dans lequel le couvercle de protection (3) est fixé au boîtier (2) de réflecteur, de préférence par soudure ou collage, et une source lumineuse, de préférence une ampoule électrique (13) est agencée dans une chambre d'éclairage formée entre le réflecteur d'une forme libre (5) et le couvercle de protection (3), **caractérisé en ce que** le boîtier (2) de réflecteur est réalisé en une seule pièce par moulage par injection à plusieurs composants, en ce que la partie de base (4) est peinte au pistolet dans un premier cycle de peinture au pistolet, la partie de base comportant une paroi de support (7) pour le réflecteur (5) à surfaces d'une forme libre comportant une surface (8) tournée vers le couvercle de protection (3) dont la forme correspond à au moins une partie de la forme du réflecteur (5) à surfaces d'une forme libre, et en ce que le réflecteur (5) à surfaces de forme libre est peint au pistolet dans un second cycle de peinture au pistolet et à cette occasion est peint au pistolet sur la surface (8) tournée vers le couvercle de protection (3) de la paroi de support (7) de la partie de base (4), de telle sorte que la surface réfléchissante (6) qui doit de préférence être métallisée est formée dans le domaine de visibilité de manière exempte d'irrégularités gênantes.

2. Feu de véhicule selon la revendication 1, **caractérisé en ce que** le réflecteur (5) à surfaces d'une forme libre est constitué d'une matière plastique identique à, ou différente de celle de la partie de base (4).

3. Feu de véhicule selon l'une des revendications précédentes, **caractérisé en ce que** le réflecteur (5) à surfaces d'une forme libre fait saillie depuis la paroi de support (7) de la partie de base (4) vers l'extérieur et en ce que le couvercle de protection (3) est fixé au bord saillant du réflecteur (5) à surfaces d'une forme libre.

4. Feu de véhicule selon la revendication 3, **caractérisé en ce qu'**une ou plusieurs lèvres souples (16, 18) sont peintes au pistolet sur le bord saillant du réflecteur (5) à surfaces d'une forme libre et/ou sur une nervure de support (17) formée sur le bord saillant dans un troisième cycle de peinture au pistolet.

5. Feu de véhicule selon l'une des revendications 1 ou 2 **caractérisé en ce que** la paroi de support (7) de la partie de base (4), qui comporte la surface (8) tournée vers le couvercle de protection (3) s'étend jusqu'au bord du boîtier de réflecteur (2), en ce que le réflecteur (5) à surfaces d'une forme libre peint au pistolet sur la surface (8) est relativement mince par rapport à la paroi de support (7) de la partie de base (4) et aboutit sensiblement au bord extérieur de la surface (8), et en ce que le couvercle de protection (3) est fixé au bord de la paroi de support (7) de la partie de base (4) .

6. Feu de véhicule selon la revendication 5, **caractérisé en ce qu'**une ou plusieurs lèvres souples (16, 18) sont peintes au pistolet dans un troisième cycle de peinture au pistolet sur le bord de la paroi de support (7) de la partie de base (4) et/ou sur une nervure de support (17) formée sur le bord de la paroi de support (7).

7. Feu de véhicule selon la revendication 6, dans lequel le couvercle de protection (3) présente un bord (24) orienté vers l'intérieur et à peu de distance de ce bord (24) une nervure de raccordement (23) orientée vers l'intérieur, et la paroi de support (7) de la partie de base (4) comporte à peu de distance d'une surface avant (21) formée sur le bord de la paroi de support (7), une nervure de raccordement (22) orientée vers l'extérieur, et le couvercle de protection (3) et la partie de base (4) sont reliés l'un à l'autre au niveau de ces nervures de raccordement (22, 23), **caractérisé en ce que** la lèvre souple (16) est peinte au pistolet sur la surface ou face avant (21) de la paroi de support (7), et en ce que la lèvre souple (16) s'étend depuis la face avant (21) en direction de la face extérieure du couvercle de protection (3) et est alors disposée dans une position adjacente à l'extérieur du bord (24) orienté vers l'intérieur du couvercle de protection (3).

8. Feu de véhicule selon la revendication 6, dans lequel le couvercle de protection (3) présente un bord orienté vers l'intérieur (24) et à peu de distance de ce bord (24) une nervure de raccordement (23) orientée vers l'intérieur, et la paroi de support (7) de la partie de base (4) présente un bord (25) orienté vers l'extérieur et à peu de distance de ce bord (25) une nervure de raccordement (22) orientée vers l'extérieur, et le couvercle de protection (3) et la partie de base (4) sont reliés l'un à l'autre au niveau de ces nervures de raccordement (22, 23), **caractérisé en ce que** la nervure souple (16) dans la poche formée entre le bord (25) orienté vers l'extérieur et la nervure de raccordement (22) de la paroi de support (7) est peinte au pistolet sur le boîtier (2) de réflecteur et traverse une fente formée entre le bord (24) du couvercle de protection (3) et le bord (25) de la paroi de support (7) jusqu'à la face extérieure du feu de véhicule.
